# EUROPÄISCHE PATENTANMELDUNG

(11) **EP 2 280 271 A2**
(43) Veröffentlichungstag der Anmeldung: **02.02.2011**
(21) Anmeldenummer: 10168848.9
(22) Anmeldetag: 08.07.2010
(51) Int. Cl.: G01N 21/90

(54) **Inspektionsvorrichtung und Inspektionsverfahren zum Erkennen von Fremdkörpern in einem gefüllten Behälter**

(30) Priorität: 31.07.2009 DE 102009035585
(71) Anmelder: Krones AG, 93073 Neutraubling (DE)
(72) Erfinder: Fiegler, Rudolf, 93053 Regensburg (DE)
(74) Vertreter: Grünecker, Kinkeldey, Stockmair & Schwanhäusser Anwaltssozietät

(57) **Zusammenfassung**

Die Erfindung betrifft eine Inspektionsvorrichtung und ein Inspektionsverfahren zum Erkennen von Fremdkörpern in einem gefüllten Behälter (10). Dadurch, dass die Vorrichtung mindestens eine Inspektionskamera (15), eine Transportvorrichtung (3) zum zumindest abschnittsweise linearen Transport des Behälters und mindestens eine Vibrationseinrichtung (7) zum Vibrieren des Behälters umfasst, können Fremdkörper (17) in den Behältern (10) ohne aufwändiges Beschleunigen bzw. Abbremsen des Behälters bewegt und die Bewegungen von den Inspektionskameras auch bei feststehender Kameraposition als Einzelbilder registriert und verglichen werden. Die Konstruktion der Vorrichtung ist weniger Platz raubend und aufwändig als bei Maschinen vom Rundläufertyp und die Erkennung von Fremdkörpern zuverlässiger als bei herkömmlichen Maschinen vom Geradläufertyp.

## Beschreibung

Die Erfindung betrifft eine Inspektionsvorrichtung und ein Inspektionsverfahren zum Erkennen von Fremdkörpern in einem gefüllten Behälter.

Bei der Getränkeabfüllung in Behälter, wie beispielsweise Glas- oder Kunststoffflaschen, kann es nötig sein, die gefüllten und verschlossenen Behälter auf das Vorhandensein von Fremdkörpern zu inspizieren. Besonders schwierig ist dabei das Erkennen kleiner Partikel wie transparenter Glassplitter. Da Behälter am Boden oft Abwetzungen oder Kratzer aufweisen, sind Glassplitter oft nicht eindeutig zu identifizieren.

Zu dieser Problematik ist es aus der WO 2004/053471 A1 bekannt, auf einem ersten Karussell den Flascheninhalt in der Flasche durch Drehen und anschließendes schnelles Abbremsen der Flasche in Bewegung zu versetzen und den Flaschenboden bei sich noch bewegendem Flascheninhalt auf einem zweiten Karussell von unten im Dunkelfeld abzubilden. Die im Bild hell erscheinenden Fremdkörper können dabei von stationären oder sich mitdrehenden Kameras erfasst werden. Derartige Vorrichtungen können zwar auch kleine Partikel zuverlässig erkennen, sind allerdings sehr aufwändig und Platz raubend. Außerdem sind sie nur für rotationssymmetrische Flaschen geeignet.

Um den apparativen und zeitlichen Aufwand zum Drehen und Abbremsen der zu inspizierenden Flaschen zu vermeiden, schlägt die DE 10 2004 051 961 A1 vor, den Flascheninhalt mit einer Vibrationseinrichtung in Bewegung zu versetzen. Allerdings ist auch diese Vorrichtung als Rundläufermaschine mit einem Einlauf- und einem Auslaufstern ausgelegt. Außerdem wird pro Flaschenposition am Karussell eine Kamera benötigt.

Die WO 02/01207 A1 beschreibt eine als Geradläufer konzipierte Inspektionsvorrichtung, die Behälter in einer Riemenstation dreht und anschließend an einer Reihe seitlich postierter Kameras vorbeiführt. Diese liefern getriggerte Einzelbilder, die in einer Auswerteeinheit verglichen werden. Es ist jedoch schwierig, die Flaschen in der Riemenstation schnell zu beschleunigen bzw. wieder abzubremsen und dabei präzise zu führen, so dass Fremdstoffe nicht mit ausreichender Zuverlässigkeit und Genauigkeit erkannt werden können.

Es ist somit Aufgabe der Erfindung, eine kompakte Inspektionsvorrichtung mit hoher Erkennungsgenauigkeit und einfachem Aufbau bereitzustellen sowie ein entsprechendes Inspektionsverfahren.

Erreicht wird dies mit einer Vorrichtung mit mindestens einer Inspektionskamera, einer Transportvorrichtung zum zumindest abschnittsweise linearen Transport des Behälters und mindestens einer Vibrationseinrichtung zum Vibrieren des Behälters.

Dadurch, dass der Behälter in einem Geradläufer mit dieser Anordnung insbesondere auch seitlich vibriert werden kann, werden Fremdkörper im Behälter ohne aufwändiges Beschleunigen bzw. Abbremsen des Behälters in Bewegung versetzt. Diese kann von der Inspektionskamera auch bei feststehender Kameraposition in Einzelbildern registriert und durch Vergleich der Bilder erkannt werden. Dadurch entfallen die bei Maschinen vom Rundläufertyp üblichen, Platz raubenden und aufwändigen Konstruktionen. Der Anteil von falschnegativen Untersuchungsergebnissen ist im Vergleich zu herkömmlichen Inspektionsvorrichtungen vom Geradläufertyp deutlich reduziert.

Vorzugsweise umfasst die Vibrationseinrichtung mindestens einen Vibrator zum Erzeugen von Vibrationen sowie einen umlaufenden Übertragungsriemen zum Übertragen der Vibrationen auf den Behälter. Dies ermöglicht eine effektive Übertragung von Vibrationen auf die sich am Vibrator vorbei bewegende Seitenwand des Behälters.

Vorzugsweise ist der Vibrator ein Motor mit einer Unwucht. Auf diese Weise lassen sich Vibrationen auf einfache und kostengünstige Weise erzeugen und gegebenenfalls mehrere Vibratoren in einer Vibrationseinrichtung kombinieren.

Bei einer besonders günstigen Ausführungsform umfasst die Vibrationseinrichtung eine Gleitschiene und/oder eine Rolleneinheit, die mit dem Vibrator und dem Übertragungsriemen in Kontakt ist. Dadurch kann der Vibrator stationär angeordnet, Vibrationen auf den vorbeilaufenden Riemen übertragen und die dabei auf den Übertragungsriemen einwirkenden Reibungskräfte minimiert werden.

Vorzugsweise sind mindestens zwei Vibrationseinrichtungen vorgesehen, die auf die Seitenwand des Behälters aus im Wesentlichen entgegengesetzten Richtungen einwirken. Dadurch wird die Übertragung von Vibrationen auf den Behälter besonders effektiv.

Bei einer besonders günstigen Ausführungsform umfasst die Transportvorrichtung ein oberes und ein unteres Paar Führungsriemen, das den Behälter jeweils bodenfrei hält, und die Vibrationseinrichtung ist so eingerichtet, dass sie zwischen mindestens einem oberen und einem unteren Führungsriemen Vibrationen auf den Behälter überträgt. Dadurch lässt sich die Vibrationseinrichtung auf einfache und Platz sparende Weise in eine bodenfreie Transportvorrichtung vom Geradläufertyp integrieren.

Vorzugsweise sind die Führungsriemen bei einer Schwingungsfrequenz der Vibrationseinrichtung schwingungsdämpfend. Dies verhindert eine unerwünschte Übertragung der Vibrationen auf das Grundgestell der Inspektionsvorrichtung

Vorzugsweise ist die Inspektionskamera so angeordnet, dass sie im Dunkelfeld Bilder des Behälterbodens von unten aufnehmen kann. Dies ermöglicht eine besonders kontrastreiche Darstellung von Fremdkörpern und gewährleistet eine definierte optische Untersuchungsebene.

Bei einer besonders günstigen Ausführungsform sind mindestens zwei Inspektionskameras bezüglich der Transportrichtung der Transportvorrichtung hintereinander angeordnet, wobei sich die Bildbereiche der Inspektionskameras überlappen. Auf diese Weise kann ein lückenlose Sequenz von Einzelbildern erstellt werden, wobei Veränderungen am Behälterboden beim Vergleich der Einzelbilder auf sich bewegende Fremdkörper hinweisen.

Eine bevorzugte Ausführungsform umfasst ferner mindestens eine Beleuchtungseinrichtung, die den Behälter unterhalb der Vibrationseinrichtung, insbesondere unterhalb der Transportvorrichtung, seitlich bestrahlt. Dadurch können Fremdkörper besonders effektiv angestrahlt und durch Strahlablenkung an den Fremdkörpern sichtbar gemacht werden.

Vorzugsweise ist die Beleuchtungseinrichtung eine kontinuierliche Lichtquelle. In diesem Fall kann die Kamera unabhängig von der Lichtquelle getriggert werden, um die Bilderfassung zu optimieren.

Vorzugsweise sind mindestens zwei Beleuchtungseinrichtungen vorgesehen, die einen den Behälter beidseitig beleuchtenden Lichtkorridor bilden. Der Behälterboden kann dadurch besonders gleichmäßig ausgeleuchtet werden.

Eine besonders günstige Ausführungsform umfasst ferner eine Auswerteeinheit zum Erkennen der Fremdkörper durch Vergleich von Bilddaten der Inspektionskamera und eine Ausleitvorrichtung zum Ausleiten beanstandeter Behälter. Dadurch kann sichergestellt werden, dass nur einwandfreie Behälter weiterverarbeitet werden.

Die Problemstellung wird ferner durch ein Inspektionsverfahren gelöst, das folgende Schritte umfasst: a) zumindest abschnittsweise linearer Transport des Behälters; b) seitliches Vibrieren des Behälters, um auf dem Behälterboden befindliche Fremdkörper zu bewegen; und c) Bild gebendes Erfassen von Licht, das an den Fremdkörpern abgelenkt wurde.

Dadurch, dass die Behälter in einem Geradläufer seitlich vibriert werden, können Fremdkörper auf dem Behälterboden ohne aufwändiges Beschleunigen bzw. Abbremsen des Behälters bewegt und die Bewegungen mit Inspektionskameras auch bei feststehender Kameraposition als Einzelbilder registriert und verglichen werden. Dadurch entfallen die bei Maschinen vom Rundläufertyp üblichen, Platz raubenden und aufwändige Konstruktionen.

Vorzugsweise werden im Schritt c) getriggerte Einzelaufnahmen des Behälterbodens im Dunkelfeld gemacht, und das Verfahren umfasst ferner folgende Schritte: d) Auswerten der erfassten Bilddaten, wobei dem Behälterboden in den Einzelaufnahmen jeweils ein Auswertebereich zugeordnet wird und Bilddaten aus den zugeordneten Auswertebereichen miteinander verglichen werden, um Fremdkörper als Unterschiede in den verglichenen Bilddaten zu erkennen; und e) Ausschleusen des Behälters, falls in diesem mindestens ein Fremdkörper erkannt wurde.

Dadurch wird eine kontrastreiche Darstellung der Fremdkörper ermöglicht. Außerdem kann der Zeitaufwand für die Auswertung der Bilddaten reduziert und somit die Anzahl der pro Inspektion möglichen Einzelbilder zugunsten einer verbesserten Erkennungswahrscheinlichkeit und Genauigkeit erhöht werden.

Eine bevorzugte Ausführungsform ist in der Zeichnung dargestellt. Es zeigen:
- Fig. 1: eine schematische Draufsicht auf eine erfindungsgemäße Inspektionsvorrichtung;
- Fig.2: einen schematischen Querschnitt durch die Vorrichtung aus Fig. 1 entlang der Schnittlinie A - A.

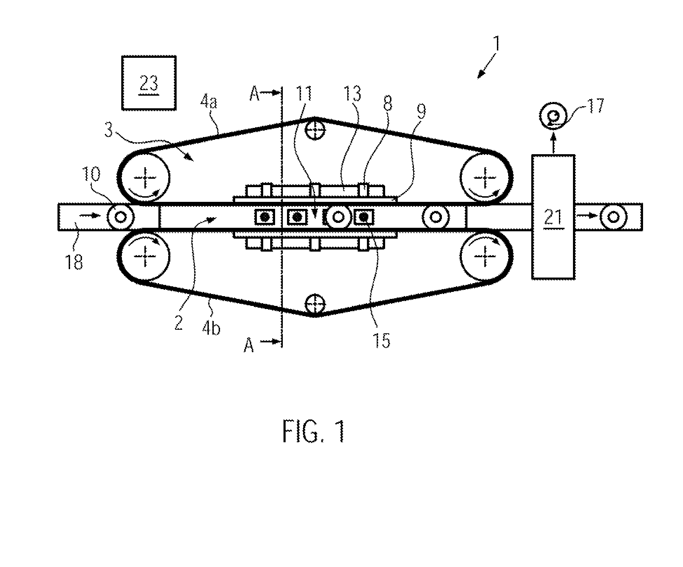

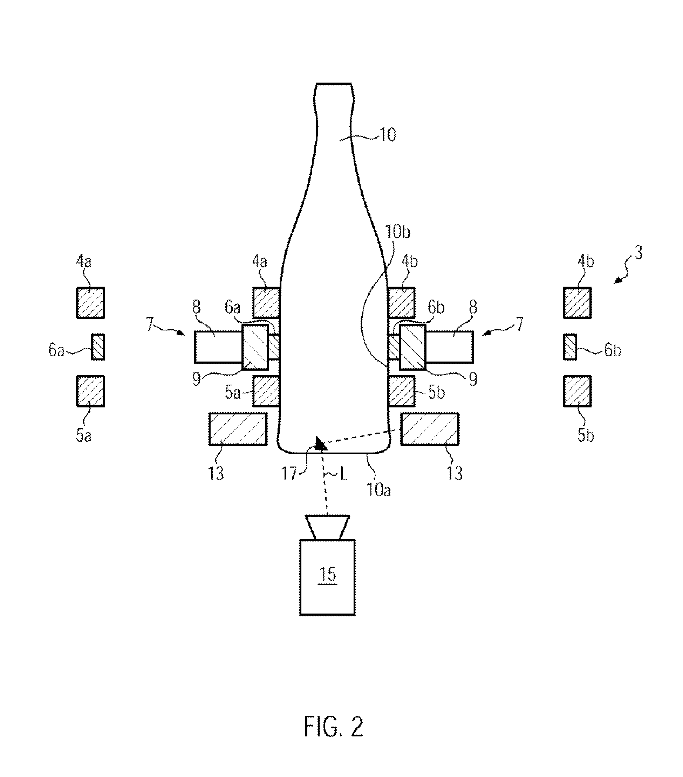

Wie Fig. 1 und 2 erkennen lassen, ist die erfindungsgemäße Inspektionsvorrichtung 1 als Geradläufer mit einer linearen Transportstrecke 2 ausgelegt und umfasst eine Transportvorrichtung 3 mit einem oberen und einem unteren Paar Führungsriemen 4a,b und 5a,b, wobei Widerlager für die Führungsriemen 4a,b und 5a,b im Bereich der Transportstrecke 2 der Übersichtlichkeit halber weggelassen wurden und zugehörige Umlenkrollen lediglich in Fig. 1 angedeutet sind. Zwischen den Führungsriemen 4a,b und 5a,b ist ein im Wesentlichen parallel zu diesen angeordnetes und gemeinsam mit diesen umlaufendes, zusätzliches Paar Übertragungsriemen 6a,b vorgesehen (in der Draufsicht von den oberen Führungsriemen 4a,b verdeckt). Letztere sind Bestandteil einer Vibrationseinrichtung 7 mit feststehenden Vibratoren 8 und Gleitschienen 9 und dienen der Schwingungsübertragung an die zu inspizierenden, gefüllten Behälter 10, wie z. B. Glas- oder Kunststoffflaschen.

Die Führungsriemen 4a,b und 5a,b halten jeweils mindestens einen Behälter 10 bodenfrei und transportieren diesen durch einen Lichtkorridor 11 bestehend aus zwei gegenüberliegenden, seitlichen Beleuchtungseinheiten 13 über Inspektionskameras 15 hinweg, die den Behälterboden 10a bzw. auf diesem gegebenenfalls vorhandene Fremdkörper 17, wie beispielsweise Glassplitter, im Dunkelfeld abbilden.

Die Behälter 10 werden der Inspektionsvorrichtung 1 über ein erstes Förderband 18 zugeführt und von einem zweiten Förderband 19 abtransportiert und an eine Ausleitvorrichtung 21, wie einen herkömmlichen Pusher, zum Ausleiten beanstandeter Behälter 10 übergeben. Die Vorrichtung umfasst ferner eine Steuerungs- und Auswerteeinheit 23 zum Ansteuern der Kameras 15, zum Auswerten der von den Kameras 15 erzeugten Bilddaten und zum Ansteuern der Ausleitvorrichtung 21 auf der Grundlage des Inspektionsergebnisses. Dafür könnten allerdings auch getrennte Einheiten vorgesehen sein.

Die Vibrationseinrichtung 7 ist mit dem Behälter 10 beidseitig in Kontakt und überträgt Schwingungen durch die Behälterwand 10b auf gegebenenfalls auf dem Behälterboden 10a liegende Fremdkörper 17, wodurch diese in Bewegung versetzt werden. Die bezüglich der Transportrichtung beidseitige Vibrationseinrichtung 7 erlaubt eine besonders effektive Schwingungsübertragung auf den Behälter 10. Es wäre jedoch auch möglich die Vibrationseinrichtung 7 nur auf einer Seite der Transportstrecke 2 vorzusehen. Die Inspektionsvorrichtung 1 eignet sich auch für rotationsunsymmetrische Behälter 10, besonders für solche mit abschnittsweise planen Seitenflächen 10b, auf denen die Übertragungsriemen 6a,b großflächig aufliegen können, wie beispielsweise bei einem im Wesentlichen rechteckigen Behälterquerschnitt.

Die Vibrationseinrichtung 7 ist bevorzugt schwingungsgedämpft auf der Inspektionsvorrichtung 1 gelagert, so dass Vibrationen selektiv auf den Behälter 10 übertragen werden.

Die Vibrationseinrichtung 7 umfasst mindestens einen Vibrator 8, beispielsweise in Form eines Motors mit einer Unwucht, sowie eine Gleitleiste 9 und/oder ein Rollenmechanismus 9' (nicht gezeigt), über die/den je einer der Übertragungsriemen 6a,b reibungsarm läuft. Die Gleitleiste 9 kann beispielsweise aus einem Kunststoff mit niedrigem Reibungskoeffizienten gefertigt sein, wie PTFE. Die Gleitleisten 9 bzw. Rollenmechanismen 9' und/oder die Vibratoren 8 könnten durch eine Federkraft vorgespannt sein und die Übertragungsriemen 6a,b gegen den Behälter 10 drücken, um eine gute Schwingungsübertragung zu gewährleisten. Es ist auch denkbar die Schwingungsübertragung durch eine (nicht dargestellte) Befeuchtungseinrichtung an der Kontaktstelle zwischen den Übertragungsriemen 6a,b und dem Behälter 10 zu verbessern.

Der Vibrator 8 erzeugt vorzugsweise Frequenzen im Bereich zwischen 10 und 50 kHz, insbesondere zwischen 20 und 40 kHz, vorzugsweise bei 30 kHz. Besonders vorteilhaft sind Frequenzen oberhalb des hörbaren Frequenzbereichs. Bei Bedarf könnten auch Vibratoren 8 mit unterschiedlichen Frequenzen kombiniert werden. Die Anzahl der Vibratoren 8 kann vom gezeigten Beispiel abweichen.

Die Übertragungsriemen 6a,b sind bevorzugt aus einem Material gefertigt, das Vibrationen im Frequenzbereich des Vibrators 8 besonders gut auf den Behälter 10 überträgt.

Dagegen beinhalten die Führungsriemen 4a,b und 5a,b bevorzugt ein Material, das im Frequenzbereich der erzeugten Vibrationen Schwingungen besonders gut abdämpft. Zu diesem Zweck kann an den Riemen 4a,b und 5a,b eine dämpfende Schicht vorgesehen sein, beispielsweise eine geschäumte Schicht, insbesondere auf der dem Behälter 10 zugewandten Seite.

Die Beleuchtungseinheiten 13 umfassen beispielsweise mehrere in Transportrichtung hintereinander angeordnete Leuchtdioden und sind auf beiden Seiten der Transportstrecke 2 in vorzugsweise gleichem Abstand zum Behälter 10, insbesondere in unmittelbarer Nachbarschaft zum Behälterboden 10a angeordnet. Um bodennahe Partikel 17 besonders effektiv anzustrahlen, sind die Beleuchtungseinheiten 13 vorzugsweise unterhalb der unteren Führungsriemen 5a,b angeordnet. Möglich wäre aber auch eine Position zwischen den unteren Führungsriemen 5a,b und den Übertragungsriemen 6a,b.

Mit den Beleuchtungseinheiten 13 kann gerichtetes Licht unterschiedlicher Wellenlänge, z. B. Infrarotlicht, durch die Behälterseitenwand 10b in das Innere der gefüllten Behälter 10 eingekoppelt werden. In den Beleuchtungseinheiten 13 ist eine gemischte Anordnung von Leuchtdioden denkbar, wobei einzelne Leuchtdioden mit einer bestimmten Wellenlänge entsprechend der Behälter- und/oder Füllgutart selektiv betrieben werden können. Die Beleuchtungseinheiten 13 senden bevorzugt kontinuierliches Licht aus, um die Bildaufnahme zu beliebigen Zeitpunkten auslösen zu können. Es sind jedoch auch mit den Kameras 15 synchron gepulste Beleuchtungseinheiten 13 denkbar.

Die Kameras 15 sind so positioniert, dass sie Bilder der bodenfrei gehaltenen Behälter 10 von unten aufnehmen können. Die Kameras 15 sind zu diesem Zweck auf den Behälterboden 10a fokussiert bzw. auf einen Bereich etwas oberhalb des Behälterbodens 10a, in dem Fremdkörper 17 auftreten können. Im Abbildungsstrahlengang könnten Umlenkspiegel (nicht gezeigt) zur seitlichen Strahlablenkung vorgesehen sein, beispielsweise um 90°, so dass die Kameras 15 nicht direkt unterhalb der Transportstrecke 2 angeordnet und seitlich ausgerichtet sind, um so einer Verschmutzung und/oder Beschädigung der Kameras 15 vorzubeugen.

Die Bildbereiche der Kameras 15, deren Anzahl nicht auf das gezeigte Beispiel beschränkt ist, überlappen sich, so dass eine lückenlose Folge von Einzelbildern des Behälterbodens 10a erstellt werden kann. Hierzu werden die Kameras 15 von der Steuer- und Auswerteeinheit 23 in geeigneter Weise getriggert. Die Bilddaten können beispielsweise von einem 4-zu-1-Framegabber erfasst werden, mit dem vier Kameras 15 an einen gemeinsamen Rechenprozessor der Steuer- und Auswerteeinheit 23 angeschlossen werden. Es könnte jedoch auch nur eine Kamera 15 vorgesehen sein.

Die Steuer- und Auswerteeinheit 23 wertet nur einen Teil der Bilddaten einer Einzelaufnahme aus, nämlich einen dem Flaschenboden 10a zugeordneten (nicht gezeigten) Auswertebereich ROI (Region Of Interest), beispielsweise einen kreisförmigen Bildausschnitt. Das heißt, die Steuer- und Auswerteeinheit 23 sucht nur im Auswertebereich ROI nach bewegten Strukturen bzw. Fremdkörpern 17. Dies verringert den Zeitbedarf für die Auswertung einer einzelnen Aufnahme und erhöht die Zahl der pro Behälterinspektion möglichen Aufnahmen. Dadurch steigt die Wahrscheinlichkeit, dass eine Lichtreflexion an einem Fremdkörper 17, wie in Fig. 2 durch die gestrichelte Linie L angedeutet, registriert bzw. erkannt werden kann, und damit die Genauigkeit bzw. die Zuverlässigkeit der Fremdkörpererkennung.

Mit der erfindungsgemäßen Inspektionsvorrichtung kann wie folgt gearbeitet werden:

Die zu inspizierenden, gefüllten Behälter 10 werden kontinuierlich von dem ersten Förderband 18 zugeführt, laufen hintereinander bodenfrei durch die lineare Transportstrecke 2 und werden von der Vibrationseinrichtung 7 mit Vibrationen im Kilohertz-Bereich beaufschlagt. Bodennahe Partikel 17 werden durch die Schwingungen bewegt und springen auf dem Behälterboden 10a umher. Dabei lenken sie das seitlich einfallende Licht zu den Kameras 15 um, die getriggerte Bilder des Behälterbodens 10a aufnehmen und an die Steuer- und Auswerteeinheit 23 weiterleiten. Dort werden Bildausschnitte, insbesondere dem Behälterboden 10a entsprechende Auswertebereiche ROI, der Kamerabilder eines Behälters 10 miteinander verglichen. Bildunterschiede im Auswertebereich ROI werden als sich bewegendes Partikel erkannt und der beanstandete Behälter 10 wird ausgeleitet, so dass nur einwandfreie Behälter 10 zur Weiterverarbeitung gelangen.

Die erfindungsgemäße Vorrichtung 1 ist im Vergleich zu Rundläufermaschinen deutlich kompakter und kostengünstiger. Auch rotationsunsymmetrische Formflaschen können auf diese Weise inspiziert werden. Die Erkennung von Fremdkörpern 17 ist genauer und zuverlässiger als bei herkömmlichen Inspektionsvorrichtungen vom Geradläufertyp.

## Patentansprüche

1. Inspektionsvorrichtung (1) zum Erkennen von Fremdkörpern (17) in einem gefüllten Behälter (10), mit:
a) mindestens einer Inspektionskamera (15);
b) einer Transportvorrichtung (3) zum zumindest abschnittsweise linearen Transport des Behälters (10); und
c) mindestens einer Vibrationseinrichtung (7) zum Vibrieren des Behälters (10).

2. Inspektionsvorrichtung nach Anspruch 1, **dadurch gekennzeichnet, dass** die Vibrationseinrichtung (7) mindestens einen Vibrator (8) zum Erzeugen von Vibrationen umfasst sowie einen umlaufenden Übertragungsriemen (6a,b) zum Übertragen der Vibrationen auf den Behälter (10).

3. Inspektionsvorrichtung nach Anspruch 2, **dadurch gekennzeichnet, dass** der Vibrator (8) ein Motor mit einer Unwucht ist.

4. Inspektionsvorrichtung nach Anspruch 2 oder 3, **dadurch gekennzeichnet, dass** die Vibrationseinrichtung eine Gleitschiene (9) und/oder eine Rolleneinheit (9') umfasst, die mit dem Vibrator (8) und dem Übertragungsriemen (6a,b) in Kontakt ist.

5. Inspektionsvorrichtung nach mindestens einem der vorigen Ansprüche, **dadurch gekennzeichnet, dass** mindestens zwei Vibrationseinrichtungen (7) vorgesehen sind, die auf die Seitenwand (10b) des Behälters (10) aus im Wesentlichen entgegengesetzten Richtungen einwirken.

6. Inspektionsvorrichtung nach mindestens einem der vorigen Ansprüche, **dadurch gekennzeichnet, dass** die Transportvorrichtung (3) ein oberes (4a,b) und ein unteres (5a,b) Paar Führungsriemen umfasst, das den Behälter (10) jeweils bodenfrei hält, und die Vibrationseinrichtung (7) so eingerichtet ist, dass sie zwischen mindestens einem oberen (4a,b) und einem unteren (5a,b) Führungsriemen Vibrationen auf den Behälter (10) überträgt.

7. Inspektionsvorrichtung nach Anspruch 6, **dadurch gekennzeichnet, dass** die Führungsriemen (4a,b 5a,b) bei einer Schwingungsfrequenz der Vibrationseinrichtung (7) schwingungsdämpfend sind.

8. Inspektionsvorrichtung nach mindestens einem der vorigen Ansprüche, **dadurch gekennzeichnet, dass** die Inspektionskamera (15) so angeordnet ist, dass sie im Dunkelfeld Bilder des Behälterbodens (10a) von unten aufnehmen kann.

9. Inspektionsvorrichtung nach mindestens einem der vorigen Ansprüche, **dadurch gekennzeichnet, dass** mindestens zwei Inspektionskameras (15) bezüglich der Transportrichtung der Transportvorrichtung (3) hintereinander angeordnet sind und sich die Bildbereiche der Inspektionskameras (15) überlappen.

10. Inspektionsvorrichtung nach mindestens einem der vorigen Ansprüche, ferner **gekennzeichnet durch** mindestens eine Beleuchtungseinrichtung (13), die den Behälter (10) unterhalb der Vibrationseinrichtung (7), insbesondere unterhalb der Transportvorrichtung (3) seitlich bestrahlt.

11. Inspektionsvorrichtung nach Anspruch 10, **dadurch gekennzeichnet, dass** die Beleuchtungseinrichtung (13) eine kontinuierliche Lichtquelle ist.

12. Inspektionsvorrichtung nach Anspruch 10 oder 11, **dadurch gekennzeichnet, dass** mindestens zwei Beleuchtungseinrichtungen (13) vorgesehen sind, die einen den Behälter (10) beidseitig beleuchtenden Lichtkorridor (11) bilden.

13. Inspektionsvorrichtung nach mindestens einem der vorigen Ansprüche, ferner **gekennzeichnet durch** eine Auswerteeinheit (23) zum Erkennen der Fremdkörper (17) **durch** Vergleich von Bilddaten der Inspektionskamera (15) und eine Ausleitvorrichtung (21) zum Ausleiten beanstandeter Behälter (10).

14. Inspektionsverfahren zum Erkennen von Fremdkörpern (17) in einem gefüllten Behälter (10), mit folgenden Schritten:
a) zumindest abschnittsweise linearer Transport des Behälters (10);
b) Vibrieren der Behälterseitenwand (10b), um auf dem Behälterboden (10a) befindliche Fremdkörper (17) zu bewegen; und
c) Bild gebendes Erfassen von Licht (L), das an den Fremdkörpern (17) abgelenkt wurde.

15. Inspektionsverfahren nach Anspruch 14, **dadurch gekennzeichnet, dass** im Schritt c) getriggerte Einzelaufnahmen des Behälterbodens (10a) im Dunkelfeld gemacht werden und das Verfahren ferner folgende Schritte umfasst:
d) Auswerten der erfassten Bilddaten, wobei dem Behälterboden (10a) in den Einzelaufnahmen jeweils ein Bildausschnitt als Auswertebereich (ROI) zugeordnet wird und Bilddaten aus den zugeordneten Auswertebereichen (ROI) miteinander verglichen werden, um Fremdkörper (17) als Unterschiede in den verglichenen Bilddaten zu erkennen; und
e) Ausschleusen des Behälters (10), falls in diesem mindestens ein Fremdkörper (17) erkannt wurde.
